# EUROPEAN PATENT APPLICATION

(11) **EP 4 553 213 A1**
(43) Date of publication of application: **14.05.2025**
(21) Application number: 23838854.0
(22) Date of filing: 07.07.2023
(51) Int. Cl.: D06F 39/00

(54) **FUNCTIONAL DEVICE AND HOUSEHOLD APPLIANCE HAVING SAME**

(30) Priority: 15.07.2022 CN 202210836418; 30.11.2022 CN 202211523434
(71) Applicant: Wuxi Little Swan Electric Co., Ltd., Wuxi, Jiangsu 214028 (CN)
(72) Inventor: SUN, Zhaobo, Wuxi, Jiangsu 214028 (CN); ZHANG, Dongge, Wuxi, Jiangsu 214028 (CN); GAO, Yuan, Wuxi, Jiangsu 214028 (CN); LI, Junyue, Wuxi, Jiangsu 214028 (CN); SUN, Hui, Wuxi, Jiangsu 214028 (CN); ZHOU, Daochang, Wuxi, Jiangsu 214028 (CN); ZHANG, Mingfa, Wuxi, Jiangsu 214028 (CN); TAN, Jilin, Wuxi, Jiangsu 214028 (CN)
(74) Representative: Ran, Handong
(86) International application number: PCT/CN2023/106288
(87) International publication number: WO 2024/012362

(57) **Abstract**

The present invention provides a functional device and a household appliance having same. The functional device comprises: at least one slow-release functional unit, wherein the slow-release functional unit comprises an insoluble base frame and a soluble functional portion. Therefore, a functional material required in the use process of the household appliance can be carried by adding the soluble functional portion having a specific function into a space supported by the insoluble base frame.

## Description

### CROSS-REFERENCE TO RELATED APPLICATION

The present application claims priorities to Chinese Patent Application No. 202211523434.0, entitled "FUNCTIONAL DEVICE AND HOUSEHOLD APPLIANCE HAVING SAME", filed on November 30, 2022, and Chinese Patent Application No. 202210836418.0, entitled "SLOW-RELEASE STRUCTURE, CLOTHING TREATMENT DEVICE AND CLEANING DEVICE", filed on July 15, 2022, the entire contents of which are incorporated herein by reference.

### FIELD

The present invention relates to the field of household appliances, and in particular, to a functional device and a household appliance having the functional device.

### BACKGROUND

In the related art, household appliances such as washing machines, dishwashers, and floor scrubbers are currently typically added with functional materials in an operating environment for exerting various functions such as deodorization, descaling, and sterilization. The functional materials, for example, include aromatherapy materials for deodorization, salts for descaling, silver phosphate for sterilization, guanidine for long-term bacteriostasis, and healthy natural bactericides. For ease of use and maintaining long-term effectiveness of the functional effects, the above-mentioned functional materials are typically required to be carried using specially designed carriers. For example, silver phosphate is required to be carried in glass; natural antibacterial agents and guanidine are required to be carried in plastic matrices; and descaling salts can be loaded on activated carbon. However, the above-mentioned functional materials are essentially randomly dispersed in a matrix, and thus a stable release pathway can be hardly formed. Only the functional materials dispersed on a surface of the matrix can be released to exert the functions thereof, while the functional materials located inside the matrix can hardly be dissolved in water to release, and thus the effects of the functional materials cannot be fully exerted. In addition, in the above-mentioned solutions, the specific carriers shall be designed for different types of functional materials. Various carriers, due to the lack of universality and extendibility, can hardly exert their effects on the household appliances simultaneously, thereby failing to meet users' requirements.

### SUMMARY

The present invention aims to solve one of the technical problems in the related art to at least a certain extent.

To this end, an object of the present invention is to provide a functional device for a household appliance. The functional device includes a slow-release functional unit capable of slowly and sufficiently releasing a functional material. The slow-release functional unit can serve as a universal carrier for different functional materials, thereby providing good user experience.

In an aspect, the present invention provides a functional device. According to an embodiment of the present invention, the functional device includes at least one slow-release functional unit. Each of the at least one slow-release functional unit includes an insoluble base frame and a soluble functional portion. Thus, in the functional device for the household appliance, the functional material required during use of the household appliance can be carried on the household appliance by adding the soluble functional portion with a specific function into space supported by the insoluble base frame. The slow-release functional unit can serve as a universal carrying platform for different functional materials, having good universality and extendibility. The users can select and apply functional devices with various slow-release functional units in the household appliance to slowly and sufficiently release the functional materials during the use of the household appliance. In this way, the user experience can be improved.

According to an embodiment of the present invention, the insoluble base frame includes a plurality of base frame branches arranged at intervals; a gap is formed between any two base frame branches of the plurality of base frame branches; and at least part of a plurality of gaps is in communication with each other to form a channel.

According to an embodiment of the present invention, the slow-release functional unit has an opening at a surface of the slow-release functional unit; and an exterior of the slow-release functional unit and the channel are in communication with each other via the opening.

According to an embodiment of the present invention, the soluble functional portion includes a soluble substrate and a functional material; the functional material is mixed in the soluble substrate; and the channel is at least partially filled with the soluble functional portion.

In this way, the functional material is mixed in the soluble substrate to form the soluble functional portion, and the channel is at least partially filled with the soluble functional portion. The channel has an irregular shape defined by a plurality of base frame branches and is in communication with the exterior of the slow-release functional unit via the opening. A dissolving medium can flow into the channel through the opening to dissolve the soluble functional portion, and the functional material is released into the environment outside the insoluble base frame with the dissolving of the soluble functional portion. Due to the irregular shape of the channel, and the dissolving medium can sufficiently flush and dissolve the functional material in the channel with the changing flow velocity and flow direction of the dissolving medium. Thus, by using the slow-release functional unit, all the functional materials in the channel can be gradually released, thereby prolonging a usage duration of the slow-release functional unit and improving a material utilization rate to avoid waste of the functional materials.

According to an embodiment of the present invention, the slow-release functional unit includes: 30 to 70 parts by weight of the insoluble base frame; 15 to 60 parts by weight of the soluble substrate; and 1 to 35 parts by weight of the functional material.

According to an embodiment of the present invention, the slow-release functional unit further includes 5 to 10 parts by weight of a chain extender.

According to an embodiment of the present invention, the soluble substrate includes at least one of polyvinyl alcohol, polyethylene glycol, and polyethylene oxide.

According to an embodiment of the present invention, the insoluble base frame includes at least one of plastic, rubber, and fiber.

According to an embodiment of the present invention, the functional material includes at least one of metallic substances, polymer substances, natural extract substances, scale inhibitor substances, and ionic substances, or a combination thereof.

According to an embodiment of the present invention, the household appliance further includes a water supply device. The water supply device is connected to the aforementioned functional device and adapted to supply water to the functional device. Thus, a dissolving medium supply device supplies a dissolving medium to the aforementioned functional device during operation of the household appliance, enabling the functional material in the slow-release functional unit to be released into the environment outside the insoluble base frame with the dissolving of the soluble substrate in the dissolving medium, thereby meeting the user's needs for a plurality of functions. In this way, the usage duration of the slow-release functional unit can be prolonged, and the material utilization rate can be improved to avoid waste of the functional materials, thereby providing good user experience.

Additional aspects and advantages of the embodiments of present invention will be provided at least in part in the following description, or will become apparent in part from the following description, or can be learned from the practice of the embodiments of the present invention.

### BRIEF DESCRIPTION OF THE DRAWINGS

These and other aspects and advantages of embodiments of the present invention will become apparent and more readily appreciated from the following descriptions made with reference to the accompanying drawings.
FIG. 1 is a structural view of a household appliance according to an embodiment of the present invention.
FIG. 2 illustrates a functional device according to an embodiment of the present invention.
FIG. 3 is a cross-sectional view of a functional device according to an embodiment of the present invention.
FIG. 4 is a schematic structural view of an interior of a slow-release functional unit according to an embodiment of the present invention.

### DETAILED DESCRIPTION

Solutions of the present invention are explained below in conjunction with embodiments. Those skilled in the art can understand that the following embodiments are only used to illustrate the present invention and should not be construed as a limitation to the scope of the present invention. When the specific technology or conditions are not specified in the embodiments, the technology or conditions described in the literature in the art or a product manual will prevail. Reagents or instruments used without specifying the manufacturer are all conventional and commercially available products.

The present invention will be described below with reference to specific embodiments. It should be noted that these embodiments are only descriptive and do not limit the present invention in any way.

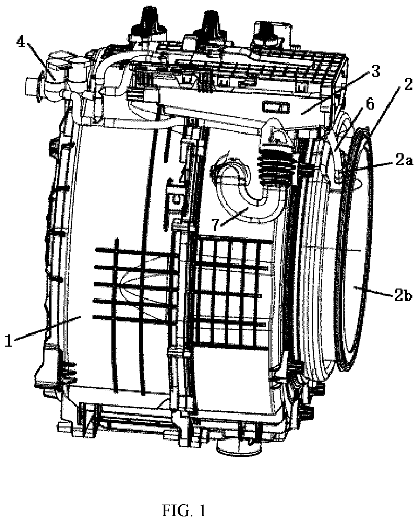

In an aspect, the present invention provides a household appliance. The household appliance includes a washing machine, a dryer, a dishwasher, a floor scrubber, a water purifier and other optional household appliances. A washing machine will be described as an example in the present invention. According to an embodiment of the present invention, referring to FIG. 1, the washing machine includes an outer tub 1, an inner drum having a clothing chamber, a door seal 2, a dispensing device 3, and a water supply device 4. The outer tub 1 has an opening at a side of the outer tub 1 in an axial direction, and the inner drum is rotatably disposed in the outer tub 1. The inner drum rotates to drive clothing, detergent and/or water to move, thereby treating the clothing. The opening of the outer tub 1 is surrounded by the door seal 2, and the door seal 2 has a liquid delivery opening 2a and a clothing loading opening 2b in communication with the clothing chamber. The dispensing device 3 is provided with a detergent cavity for placing detergent, and the water supply device 4 is configured to supply water to the washing machine. In an embodiment, the water supply device 4 may be a water inlet valve or a circulation pump.

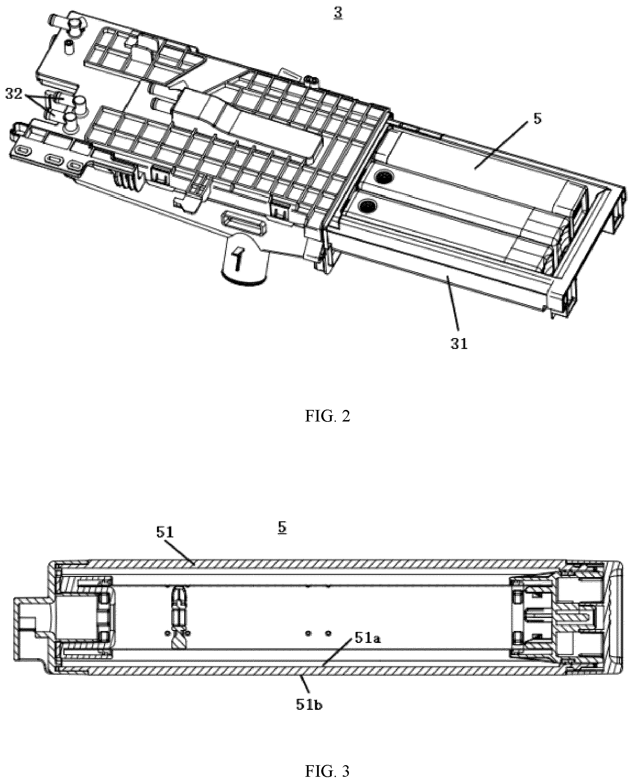

According to an embodiment of the present invention, the washing machine further includes a functional device 5. The functional device 5 is defined as a device for adding a functional material to an operating environment of the washing machine to exert different functions such as deodorization, descaling, sterilization, care, and decontamination. The specific functions thereof are not limited by the present invention. The functional device 5 may be disposed at different positions of the washing machine and may also have different forms, as long as it is directly or indirectly connected to the water supply device 4. For example, the functional device 5 may be in the form of a container having an accommodation cavity, such as the functional device 5 in FIG. 3; or the functional device 5 may be in the form of a groove structure of the door seal 2; or the functional device 5 may be in the form of a lift rib structure of the inner drum. That is, any structure of the washing machine, in which the functional material can be placed, is an optional form of the functional device 5, which is not limited by the present invention. Correspondingly, the functional device 5 may be placed at different positions of the washing machine. For example, when the functional device 5 is in the form of the container having the accommodation cavity, the functional device 5 may be placed in the dispensing device 3 or in a water inlet pipeline; when the functional device 5 is in the form of the groove structure, the functional device 5 may be placed in the door seal 2; and when the functional device 5 is in the form of the lift rib structure, the functional device 5 may be placed in the inner drum. That is, the functional devices 5 of the different forms may be disposed at the corresponding positions. In addition, in other types of household appliances such as dishwashers, floor scrubbers, and water purifiers, the form and position of the functional device 5 may be changed based on characteristics of the household appliances, which are not limited by the present invention. According to an embodiment of the present invention, the functional device 5 in the form of the container having the accommodation cavity and disposed in the dispensing device 3 will be described as an example. Referring to FIG. 1 to FIG. 3, the dispensing device 3 includes a detergent box and a dispenser 31. The detergent box has a water inlet 32, and the water supply device 4 is connected to the water inlet 32. Water flow flows into the dispenser 31 through the water inlet 32. The dispenser 31 has a dispenser shell. The dispenser 31 has a chamber defined in the dispenser shell. The functional device 5 is disposed in the chamber, and the water flow flowing into the dispenser 31 may flow into the functional device 5. The dispensing device 3 and the door seal 2 further have a first drainage pipeline 6, and a solution containing the dissolved functional material and flowing out of the functional device 5 flows into the door seal 2 through the first drainage pipeline and flows into the inner drum.

According to an embodiment of the present invention, referring to FIG. 3, the slow-release functional unit is defined as a unit capable of slowly releasing a functional material into a dissolving medium (such as water, an acidic solution, or an alkaline solution), which is a solid product formed by processing a plurality of materials through specific process steps. For example, each slow-release functional unit may be in a shape of solid particles. The functional device 5 may include one or more slow-release functional units. A plurality of slow-release functional units may have the same function or different functions, which is not specifically limited in the present invention.

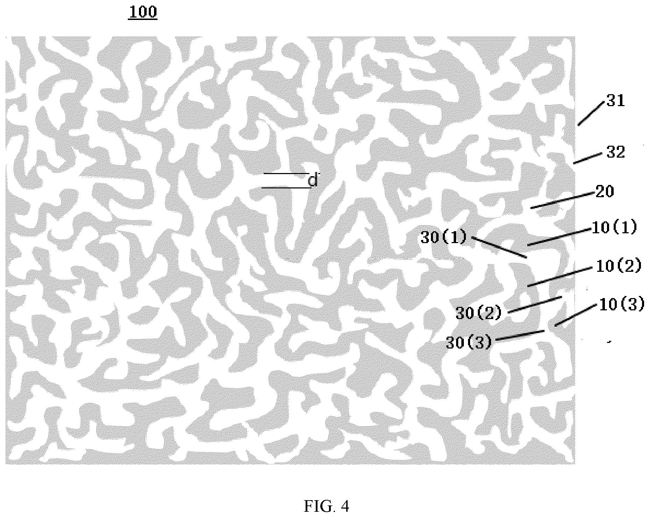

According to an embodiment of the present invention, referring to FIG. 4, the slow-release functional unit includes an insoluble base frame 10 and a soluble functional portion 20. The insoluble base frame 10 is insoluble in water or a detergent solution, and the soluble functional portion 20 can be gradually dissolved in water or a detergent solution and gradually release a functional material in a dissolution process, thereby exerting the functions required by the household appliance. In an intact slow-release functional unit, the insoluble base frame 10 serves as a main body to support space where the slow-release functional unit is located, and the soluble functional portion 20 is formed inside the space where the slow-release functional unit is located by taking the insoluble base frame 10 as a carrier. In a section of the intact slow-release functional unit, as illustrated in FIG. 4, it can be seen by means of a microscopic observation device such as an electron microscope that the insoluble base frames 10 and the soluble functional portions 20 are alternatingly arranged. Thus, by adding the soluble functional portion 20 having the predetermined function in the space supported by the insoluble base frame 10, the slow-release functional unit can exert the functions required in an operation process of the household appliance under an action of the dissolving medium. The slow-release functional unit may serve as a universal platform for carrying different functional materials, which has good universality and extendibility. Users may choose a functional device having different slow-release functional units. When the water supply device 4 injects the dissolving medium into the functional device 5, the dissolving medium can dissolve the soluble functional portion 20, and the dissolved soluble functional portion 20 is slowly released into the environment outside the insoluble base frame 10, to realize an effect of slowly and sufficiently releasing the functional material in a clothing treatment process. In this way, user experience can be improved.

In some embodiments, referring to FIG. 4, the insoluble base frame 10 includes a plurality of base frame branches 10(1), 10(2), 10(3). Outer edges of the plurality of base frame branches 10(1), 10(2), 10(3) are arranged at intervals in the space. A gap 30(1), 30(2), 30(3) is formed between the outer edges of any two base frame branches 10(1), 10(2), 10(3). The plurality of gaps 30(1), 30(2), 30(3) are randomly arranged in any direction in the space, that is, at least some of the gaps 30(1), 30(2), 30(3) are not in the same plane in any direction in the space. As an example, in the section illustrated in FIG. 4, at least some gaps of the plurality of gaps 30(1), 30(2), 30(3) are in communication with each other to form a channel 30. Due to an irregular boundary of each gap 30(1), 30(2), 30(3) and the random arrangement of the gaps in the space, the channel 30 has an irregular boundary, and a path of the channel in the space is a tortuous path. A movement of a fluid in the channel 30 can frequently change in terms of a flow velocity and a flow direction, which is beneficial to flushing the soluble functional portion 20 carried on the respective base frame branches to promote sufficient dissolution of the functional material.

In some embodiments, as illustrated in FIG. 4, the slow-release functional unit 100 further has an opening 32 at an outer surface of the slow-release functional unit 100. From a macroscopic perspective, the slow-release functional unit 5 as a whole is present as an object with a certain shape, and therefore it has an outer surface. From a microscopic perspective, as illustrated in FIG. 4, the respective base frame branches 10(1), 10(2), 10(3) are not connected to each other on at least part of the edges of the section. Therefore, it can be observed that several openings 32 are formed at the edge 31 of the section. That is, these openings 32 also formed on the outer surface 31 from the macroscopic perspective for bringing the channel 30 to be in communication with an exterior of the slow-release functional unit 100, and the fluid may flow into the channel 30 of the slow-release functional unit 100 from the exterior of the slow-release functional unit 100 through the several openings 32 to dissolve the soluble functional portion 20.

In some embodiments, as illustrated in FIG. 4, the channel 30 is at least filled with the soluble functional portion 20 or is fully filled with the soluble functional portion 20. Preferably, the soluble functional portion 20 is carried on each of the plurality of base frame branches 10(1), 10(2), 10(3) of the insoluble base frame 10 to fill the entire space of the channel 30. In this way, a carrying capacity for the soluble functional portion 20 and internal space of the slow-release functional unit 100 can be both increased to prolong the usage duration of the slow-release functional unit 100.

In this embodiment, the channel 30 is at least partially filled with the soluble functional portion 20. The channel 30 is an irregular flow channel defined by the plurality of base frame branches 10(1), 10(2), 10(3), and the channel 30 is in communication with the exterior of the slow-release functional unit 100 via the opening 32. The dissolving medium may flow into the channel 30 through the opening 32 to dissolve the soluble functional portion 20, and the soluble functional portion 20 is released into the environment outside the insoluble base frame 10 in the dissolution process. Since the channel 30 is the irregular flow channel, the dissolving medium can flush and sufficiently dissolve the functional material in the channel 30 by changing the flow velocity and the flow direction of the dissolving medium. Thus, during the use of the slow-release functional unit 100, all the soluble functional portions 20 in the channel 30 can be gradually released, thereby prolonging the usage duration of the slow-release functional unit 100 and avoiding the waste of the functional material by enhancing a material utilization rate.

In some embodiments, the soluble functional portion 20 includes a soluble substrate and a functional material mixed in the soluble substrate.

In this embodiment, the soluble substrate includes at least one of polyvinyl alcohol, polyethylene glycol, and polyethylene oxide. The soluble substrate formed by the above-mentioned materials has an optimal solubility and can be slowly dissolved when the water flow flows through. In addition, the soluble substrate formed by the above-mentioned materials does not react chemically with the functional material when in contact with water, thereby ensuring stability of the slow-release functional unit 100. Meanwhile, the above-mentioned materials are safe and do not affect clothing after being dissolved in the water. In addition, due to the different solubilities of different soluble substrates in the water, a dissolution rate of the soluble functional portion 20 can also be controlled by selecting the specific type of different soluble substrates, to meet different application requirements and application environments of the slow-release functional unit 100 in the present invention.

In some embodiments, the soluble substrate has a molecular weight that may range from 50,000 to 3,000,000, and the soluble substrate of the above-mentioned molecular weight has an appropriate solubility. In addition, the dissolution rate of the soluble functional portion 20 can be controlled by controlling the molecular weight of the soluble substrate in the present invention. If the molecular weight of the soluble substrate is smaller than 50,000, the soluble functional portion 20 can be hardly formed and has an excessively high solvent rate. If the molecular weight of the soluble substrate is greater than 3,000,000, a relatively large limitation is imposed on the soluble functional portion 20, which is difficult to process and form a continuous soluble functional portion structure.

In an embodiment of the present invention, the functional material includes at least one or a combination of heavy metallic substances, polymer substances, natural extract substances, scale inhibitor substances, or ionic substances. Thus, the slow-release functional unit 100 has functions such as softening water, descaling, sterilization, deodorization, care, and decontamination. Those skilled in the art can flexibly select suitable functional materials based on actual situations of application environments of the slow-release functional unit 100 to meet application requirements of the slow-release functional unit 100. The water softener substances may be reagents such as phosphates, silicates, imine sulfonates, amino acid derivatives, hydroxy acids and derivatives thereof, and polyacrylic acid and derivatives thereof. The scale inhibitor substances may be sodium citrate, sodium polyaspartate, disodium ethylenediaminetetraacetic acid, and the like. The metallic substances may be heavy metallic substances (such as silver ions, copper ions), metallic compound substances (such as silver nitrate, copper sulfate), and the like. The natural extract substances may be amino acids, lavender oil, tea tree oil, paeonol, and the like. The polymer substances may be polyhexamethylene guanidine, amino acids, quaternary ammonium salts, polyquaternary ammonium acid, and the like. Based on specific application of the slow-release functional unit 100, those skilled in the art may also select other functional materials that can be blended with the soluble substrate while not failing.

In an embodiment of the present invention, the insoluble base frame 10 includes at least one of a polymer (such as polyethylene, polypropylene, polylactic acid), rubber, and fiber. The insoluble base frame 10 formed by the above-mentioned materials has good stability and is not easily deformed under an impact of water flow, and it is also stable in properties and not easily deteriorated. The insoluble base frame 10 formed by the above-mentioned materials and the soluble substrate formed by the above-mentioned materials can form a chemical bond to improve the stability of the slow-release functional unit 100.

In an embodiment of the present invention, the slow-release functional unit 100 includes: 30 to 70 parts by weight (e.g., 30 parts by weight, 35 parts by weight, 40 parts by weight, 45 parts by weight, 50 parts by weight, 55 parts by weight, 60 parts by weight, 65 parts by weight, 70 parts by weight) of the insoluble base frame 10; 15 to 60 parts by weight (e.g., 15 parts by weight, 20 parts by weight, 25 parts by weight, 30 parts by weight, 35 parts by weight, 40 parts by weight, 45 parts by weight, 50 parts by weight, 55 parts by weight, 60 parts by weight) of the soluble substrate; and 1 to 35 parts by weight (e.g., 1 part by weight, 5 parts by weight, 10 parts by weight, 15 parts by weight, 18 parts by weight, 20 parts by weight, 23 parts by weight, 25 parts by weight, 28 parts by weight, 30 parts by weight, 32 parts by weight, 34 parts by weight, 35 parts by weight) of the functional material. Thus, the slow-release functional unit 100 with the above-mentioned components has the appropriate proportions of the soluble substrate and the functional material. As a result, the insoluble base frame and the soluble functional portion 20 in the slow-release functional unit 100 have an appropriate volume ratio, which ensures structural stability of the slow-release functional unit 100, a rate of slowly releasing the functional material, and efficacy of the functional material. If the proportion of the insoluble base frame is excessively great, that is, a volume fraction of the soluble substrate in the slow-release functional unit 100 is relatively small, and thus a volume fraction of the soluble functional portion 20 is relatively small, the service life of the slow-release functional unit 100 may be shortened. Moreover, in this case, the insoluble base frame has a relatively tight internal skeleton, and therefore the soluble functional portion 20 inside the slow-release functional unit 100 is not easy to be in contact with the water. Thus, it is difficult to dissolve the soluble functional portion 20 or the soluble functional portion 20 has an excessively slow dissolution rate, which weakens effectiveness of the functional material. Conversely, if the proportion of the insoluble base frame is relatively small, that is, a volume fraction of the insoluble base frame is relatively small, and an interior of the slow-release functional unit 100 contains relatively more soluble functional portions 20, the soluble functional portion 20 and the insoluble base frame have relatively poor stability, and the soluble functional portion 20 has a great dissolution rate, which is easy to cause material waste. The above-mentioned usage amounts of the functional material and the soluble substrate can enable the functional material to be more evenly dispersed in the soluble substrate and a concentration of the functional material to be optimal in the soluble functional portion 20, thereby ensuring the efficacy of the slow-release functional unit 100. It can be seen that, by controlling the usage amounts of the above-mentioned components, the dissolution rate of the soluble functional portion 20 can be controlled to not only meet the requirements for the efficacy of the functional material of the slow-release functional unit 100, but also to avoid the excessively fast dissolution of the functional material, which would otherwise cause the material waste. The specific usage amount of the functional material may be set by those skilled in the related art within the range from 1 to 35 parts by weight according to the specific functional material. For example, for functional materials containing silver ions, an addition amount of the functional materials may be appropriately reduced.

In an embodiment of the present invention, the slow-release functional unit 100 further includes 5 to 10 parts by weight (e.g., 5 parts by weight, 6 parts by weight, 7 parts by weight, 8 parts by weight, 9 parts by weight, or 10 parts by weight) of a chain extender. In this way, due to the addition of the chain extender, the insoluble base frame can chemically react with the soluble substrate by modifying the insoluble base frame, which reduces a water dissolution rate of the soluble functional portion 20. Thus, the slow-release duration can be optimized, to enable the control of the dissolution rate by both physical and chemical means.

In an embodiment of the present invention, by introducing a reactive chain extender between the soluble substrate and a part of an active insoluble base frame, the soluble substrate and the part of the active insoluble base frame can be connected through chemical bonds. For example, the above-mentioned chemical bond is formed based on a chain extension reaction by adding the chain extender capable of reacting with the soluble substrate and the active insoluble base frame in a melt blending process. If the insoluble base frame is polyester containing hydroxyl groups or carboxyl groups, the chain extender may be selected from materials containing epoxy groups. The epoxy groups react with terminal hydroxyl groups of the soluble substrate and the carboxyl groups or the hydroxyl groups of the insoluble base frame material, enabling the soluble substrate and the insoluble base frame material to be connected through the chemical bonds. Thus, a bonding force between the soluble functional portion 20 and the insoluble base frame can be improved, and thus the stability of the slow-release functional unit 100 is improved, thereby preventing the soluble functional portion 20 from disengaging from the insoluble base frame, which would otherwise affect product quality. Moreover, a dissolution rate of the soluble substrate can be controlled, which in turn can control a release rate of the functional material in the slow-release functional unit 100. In this way, the efficacy of the functional material is ensured while extending the usage duration of the slow-release functional unit 100.

In an embodiment of the present invention, referring to FIG. 4, the soluble functional portion 20 has a width d ranging from 50 nm to 50 µm. For example, the width d may be 50 nm, 100 nm, 300 nm, 500 nm, 800 nm, 1 micrometer, 5 µm, 10 µm, 15 µm, 20 µm, 25 µm, 30 µm, 35 µm, 40 µm, 45 µm, or 50 µm. Thus, when the width of the soluble functional portion 20 is within the above-mentioned range, water molecules as well as the functional material and the soluble substrate of the dissolved soluble functional portion 20 can pass through smoothly without an undesirable phenomenon of blocking. Moreover, the dissolution rate of the soluble functional portion 20 can also be controlled by controlling the width of the soluble functional portion 20. The width of the soluble functional portion 20 can be realized based on the factors such as the usage amount of the insoluble base frame and processing conditions for preparing the slow-release functional unit 100. It can be understood by those skilled in the art that, as illustrated in FIG. 1, the width of the soluble functional portions 20 may not be exactly the same at different positions of the slow-release functional unit 100, as long as the width d of the soluble functional portion 20 is within in the range from 50 nm to 50 µm.

According to an embodiment of the present invention, a method for preparing the slow-release functional unit 100 may include an action at step S200 of: sequentially performing a second blending and a second granulation treatment on a functional masterbatch and an insoluble material to obtain the slow-release functional unit 100.

According to an embodiment of the present invention, the functional masterbatch is defined as a soluble masterbatch mixed with a functional material. A main component of the functional masterbatch is a soluble substance, in which the functional material is dispersed in a molecular state, an ionic state, or an atomic state. No specific requirements are set on an operating temperature of the second blending, which can be flexibly selected by those skilled in the art based on actual situations such as a specific type of the insoluble material and specific equipment of an extruder (used for the blending). In some embodiments, a twin-screw extruder may be adopted for the blending. When the twin-screw extruder is adopted, an operating temperature of a first zone of the twin-screw extruder is about 50°C, and operating temperatures of remaining operating zones (such as a second zone and a third zone) range from 160°C to 190°C.

According to an embodiment of the present invention, prior to the action of performing the second granulation treatment, the method includes: performing a second air cooling treatment on the mixture obtained by the second blending. As described above, a temperature of the product obtained after the blending by the extruder is relatively high and ranges from about 160°C to 190°C. Thus, the product is not easily shaped. Therefore, the air cooling treatment is required for the blended product in order to facilitate the subsequent granulation. According to an embodiment of the present invention, the second air cooling treatment is performed on the mixture obtained through the second blending until a temperature of the mixture is below 50°C. Thus, the product treated by cold air has better hardness and is convenient for cutting and granulation. Preferably, the slow-release functional unit 100 has a particle size ranging from 1 mm to 5 mm.

In some embodiments, prior to the action of the step S200, the method further includes an action at step S100 of: performing a first blending on the functional material and the soluble substrate, and performing a first granulation treatment on the mixture obtained by the first blending, to obtain the functional masterbatch.

According to an embodiment of the present invention, prior to the action of performing the first blending, the method further includes: pre-drying the soluble substrate. Moisture adsorbed by the soluble substrate is removed by pre-drying the soluble substrate. In this way, the soluble substrate can be prevented from being dissolved by the moisture, which would otherwise affect the stability of the slow-release functional unit 100. If the water absorption of the functional material is good, the soluble substrate and the functional material can be pre-dried together (of course, if the water absorption of the functional material is relatively poor, the functional material is not required to be dried), thereby preventing the moisture in the functional material from dissolving the soluble substrate. Thus, the efficacy of the functional material and the stability of the slow-release functional unit 100 can be prevented from being affected. In some embodiments of the present invention, a drying temperature ranges from 50°C to 80°C, for example, 50°C, 60°C, 65°C, 70°C, 75°C, or 80°C. Those skilled in the art can select the drying temperature based on the actual situations such as the specific material types of the soluble substrate and the functional material. In this way, the moisture adsorbed by the functional material can be quickly removed without affecting the performance of the functional material. Preferably, a drying duration ranges from 4 hours to 8 hours.

Preferably, before the first blending, the functional material and the soluble substrate may be pre-ground, thereby sufficiently improving uniformity of the mixing of the functional material and the soluble substrate. An adhesive may also be added during the first blending, thereby facilitating improving stability of the functional masterbatch, i.e., stability of the subsequently obtained soluble functional portion 20 in the slow-release functional unit 100.

According to an embodiment of the present invention, no specific requirements are set on the operating temperature of the first blending, which can be flexibly selected by those skilled in the art based on specific types of the functional material and the soluble substrate and specific equipment of the extruder (used for the blending). In some embodiments, a twin-screw extruder may be adopted for the blending. When the twin-screw extruder is adopted, an operating temperature of a first zone of the twin-screw extruder is about 50°C, and operating temperatures of remaining operating zones (such as a second zone and a third zone) range from 160°C to 190°C. According to an embodiment of the present invention, prior to the action of performing the first granulation treatment, the method includes: performing a first air cooling treatment on the mixture obtained by the first blending. As described above, a temperature of the product obtained after the blending by the extruder is relatively high and ranges from about 160°C to 190°C. Thus, the product is not easily shaped. Therefore, the air cooling treatment is required for the blended product in order to facilitate the subsequent granulation. According to an embodiment of the present invention, the first air cooling treatment is performed on the mixture obtained by the first blending until a temperature of the mixture is below 50°C. Thus, the product treated by cold air has better hardness and is convenient for cutting and granulation.

Preferably, the functional masterbatch has a particle size ranging from 2 mm to 5 mm. The functional masterbatch having such a particle size can be more sufficiently mixed with an insoluble polymer material, which facilitates a continuous structure of the soluble functional portion 20, and thus agglomeration unlikely occurs. If the particle size of the functional masterbatch is smaller than 2 mm, the agglomeration likely occurs, which is unfavorable for uniformity of the mixing. The particle size of the functional masterbatch greater than 5 mm is relatively unfavorable to the improvement of uniformity of a subsequent distribution of the soluble functional portion 20 in the slow-release functional unit 100, affecting continuity of the soluble functional portion 20.

According to an embodiment of the present invention, in the above-mentioned preparation method, the functional material and the soluble substrate are first blended and granulated, and then the functional masterbatch and the insoluble material are blended and granulated. In this way, the soluble substrate can constitute the soluble functional portion 20 of the slow-release functional unit 100; the functional material is dispersed in the soluble functional portion 20; the insoluble polymer material forms the insoluble base frame in the slow-release functional unit 100; and the soluble functional portion 20 is in communication with the exterior of the insoluble base frame and presents the continuous structure. In this way, the functional material can be released into the environment outside the insoluble base frame as the soluble substrate dissolves in the water. Moreover, since the soluble functional portion 20 has the continuous structure, the functional material on the surface of the insoluble base frame and inside the insoluble base frame can be gradually and sufficiently released when using the slow-release functional unit 100, the usage duration of the slow-release functional unit 100 can be prolonged, and the utilization rate of the material can be improved, avoiding the waste of the functional materials.

According to an embodiment of the present invention, the first blending is performed on the functional material, the chain extender, and the soluble substrate; and/or the second blending is performed on the functional masterbatch, the insoluble polymer material, and the chain extender. In this way, due to the addition of the chain extender, the insoluble polymer material can chemically react with the soluble substrate by changing the insoluble polymer material, thereby reducing the water dissolution rate of the soluble functional portion 20. Thus, the dissolution rate can be controlled by both the physical and chemical means.

According to an embodiment of the present invention, specific types of cleaning devices include, but are not limited to, washing machines, washer-dryer combos, dishwashers, and other cleaning devices that require water cleaning. Those skilled in the art can select specific types of the functional materials based on specific applications of the cleaning devices to realize cleaning effects for different purposes.

### Examples

### Example 1

Polyethylene oxide (PEO, a soluble substrate) and polyhexamethylene guanidine (a functional material) were dried at a temperature of 50°C for 6 hours.

A first blending was performed on polyethylene oxide and polyhexamethylene guanidine by using a twin-screw extruder. The twin-screw extruder was operated at the following temperatures: a temperature in a first zone was 50°C; a temperature in a second zone was 150°C; a temperature in a third zone was 170°C; a temperature in a fourth zone was 175°C; a temperature in a fifth zone was 175°C; a temperature in a sixth zone was 175°C; and a mold temperature was 160°C. The mixture obtained through the first blending was subjected to a first air cooling treatment until a temperature of the mixture was below 50°C.

A first granulation treatment was performed on the mixture that had been subjected to the first air cooling treatment to obtain a functional masterbatch, and the functional masterbatch had a particle size ranging from 2 mm to 5 mm.

A second blending was performed on the functional masterbatch and polyethylene (PE, an insoluble polymer material) using a twin-screw extruder. The twin-screw extruder was operated at the following temperatures: a temperature in a first zone was 150°C; a temperature in a second zone was 160°C; a temperature in a third zone was 170°C; a temperature in a fourth zone was 170°C; a temperature in a fifth zone was 170°C; a temperature in a sixth zone was 170°C; and a mold temperature was 160°C.

A first air cooling treatment was performed on the mixture obtained through the second blending until a temperature of the mixture was below 50°C.

A second granulation treatment was performed on the mixture that had been subjected to the first air cooling treatment to obtain a slow-release functional unit 100, in which a soluble functional portion 20 had a width d ranging from 50 nm and 50 µm.

In the above-described preparation method, a usage amount of the insoluble polymer material was 60 parts by weight; a usage amount of the soluble substrate was 20 parts by weight; and a usage amount of the functional material was 20 parts by weight.

### Example 2

Polyethylene oxide (PEO) was dried at a temperature of 50°C for 4 hours.

A first blending was performed on polyethylene oxide (PEO) and silver phosphate (Ag₃PO₄) using a twin-screw extruder. The twin-screw extruder was operated at the following temperatures: a temperature in a first zone was 50°C; a temperature in a second zone was 150°C; a temperature in a third zone was 170°C; a temperature in a fourth zone was 175°C; a temperature in a fifth zone was 175°C; a temperature in a sixth zone was 175°C; and a mold temperature was 160°C.

The mixture obtained through the first blending was subjected to a first air cooling treatment until a temperature of the mixture was below 50°C.

A first granulation treatment was performed on the mixture that had been subjected to the first air cooling treatment to obtain a functional masterbatch, and the functional masterbatch had a particle size ranging from 2 mm to 5 mm.

A second blending was performed on the functional masterbatch and polypropylene (PP) using a twin-screw extruder. The twin-screw extruder was operated at the following temperatures: a temperature in a first zone was 160°C; a temperature in a second zone was 170°C; a temperature in a third zone was 180°C; a temperature in a fourth zone was 180°C; a temperature in a fifth zone was 180°C; a temperature in a sixth zone was 180°C; and a mold temperature was 170°C.

The mixture obtained through the second blending was subjected to a second air cooling treatment until a temperature of the mixture was below 50°C.

A second granulation treatment was performed on the mixture that had been subjected to the second air cooling treatment to obtain a slow-release functional unit 100, in which a soluble functional portion 20 had a width d ranging from 50 nm to 50 µm.

In the above-described preparation method, a usage amount of the insoluble polymer material was 60 parts by weight; a usage amount of the soluble substrate was 39 parts by weight; and a usage amount of the functional material was 1 part by weight.

### Example 3

Polyethylene oxide (PEO) and polyhexamethylene guanidine were dried at a temperature of 50°C for 6 hours.

A first blending was performed on polyethylene oxide (PEO) and polyhexamethylene guanidine using a twin-screw extruder. The twin-screw extruder was operated at the following temperatures: a temperature in a first zone was 50°C; a temperature in a second zone was 150°C; a temperature in a third zone was 170°C; a temperature in a fourth zone was 175°C; a temperature in a fifth zone was 175°C; a temperature in a sixth zone was 175°C; and a mold temperature was 160°C.

The mixture obtained through the first blending was subjected to a first air cooling treatment until a temperature of the mixture was below 50°C.

A first granulation treatment was performed on the mixture that had been subjected to the first air cooling treatment to obtain a functional masterbatch, and the functional masterbatch had a particle size ranging from 2 mm to 5 mm.

A second blending was performed on the functional masterbatch and polypropylene (PP) using a twin-screw extruder. The twin-screw extruder was operated at the following temperatures: a temperature in a first zone was 160°C; a temperature in a second zone was 170°C; a temperature in a third zone was 180°C; a temperature in a fourth zone was 180°C; a temperature in a fifth zone was 180°C; a temperature in a sixth zone was 180°C; and a mold temperature was 170°C.

The mixture obtained through the second blending was subjected to a second air cooling treatment until a temperature of the mixture was below 50°C.

A second granulation treatment was performed on the mixture that had been subjected to the second air cooling treatment to obtain a slow-release functional unit 100, in which a soluble functional portion 20 had a width d ranging from 50 nm to 50 µm.

In the above-described preparation method, a usage amount of the insoluble polymer material was 60 parts by weight; a usage amount of the soluble substrate was 20 parts by weight; and a usage amount of the functional material was 20 parts by weight.

### Example 4

Polyethylene oxide (PEO) was dried at a temperature of 50°C for 6 hours.

A first blending was performed on polyethylene oxide (PEO) and copper sulfate (CuSO₄) using a twin-screw extruder. The twin-screw extruder was operated at the following temperatures: a temperature in a first zone was 50°C; a temperature in a second zone was 150°C; a temperature in a third zone was 170°C; a temperature in a fourth zone was 175°C; a temperature in a fifth zone was 175°C; a temperature in a sixth zone was 175°C; and a mold temperature was 160°C.

The mixture obtained through the first blending was subjected to a first air cooling treatment until a temperature of the mixture was below 50°C.

A first granulation treatment was performed on the mixture that had been subjected to the first air cooling treatment to obtain a functional masterbatch, and the functional masterbatch had a particle size ranging from 2 mm to 5 mm.

A second blending was performed on the functional masterbatch and polypropylene (PP) using a twin-screw extruder. The twin-screw extruder was operated at the following temperatures: a temperature in a first zone was 160°C; a temperature in a second zone was 170°C; a temperature in a third zone was 180°C; a temperature in a fourth zone was 180°C; a temperature in a fifth zone was 180°C; a temperature in a sixth zone was 180°C; and a mold temperature was 170°C.

The mixture obtained through the second blending was subjected to a second air cooling treatment until a temperature of the mixture was below 50°C.

A second granulation treatment was performed on the mixture that had been subjected to the second air cooling treatment to obtain a slow-release functional unit 100, in which a soluble functional portion 20 had a width d ranging from 50 nm to 50 µm.

In the above-described preparation method, a usage amount of the insoluble polymer material was 60 parts by weight; a usage amount of the soluble substrate was 20 parts by weight; and a usage amount of the functional material was 20 parts by weight.

### Example 5

Polyethylene oxide (PEO) and polyhexamethylene guanidine were dried at a temperature of 50°C for 6 hours.

A first blending was performed on polyethylene oxide (PEO), polyhexamethylene guanidine, and a chain extender ADR using a twin-screw extruder. The twin-screw extruder was operated at the following temperatures: a temperature in a first zone was 50°C; a temperature in a second zone was 150°C; a temperature in a third zone was 170°C; a temperature in a fourth zone was 175°C; a temperature in a fifth zone was 175°C; a temperature in a sixth zone was 175°C; and a mold temperature was 160°C.

The mixture obtained through the first blending was subjected to a first air cooling treatment until a temperature of the mixture was below 50°C.

A first granulation treatment was performed on the mixture that had been subjected to the first air cooling treatment to obtain a functional masterbatch, and the functional masterbatch had a particle size ranging from 2 mm to 5 mm.

A second blending was performed on the functional masterbatch and polylactic acid (PLA) using a twin-screw extruder. The twin-screw extruder was operated at the following temperatures: a temperature in a first zone was 170°C; a temperature in a second zone was 180°C; a temperature in a third zone was 180°C; a temperature in a fourth zone was 185°C; a temperature in a fifth zone was 185°C; a temperature in a sixth zone was 180°C; and a mold temperature was 170°C.

The mixture obtained through the second blending was subjected to a second air cooling treatment until a temperature of the mixture was below 50°C.

A second granulation treatment was performed on the mixture that had been subjected to the second air cooling treatment to obtain a slow-release functional unit 100, in which a soluble functional portion 20 had a width d ranging from 50 nm to 50 µm.

In the above-described preparation method, a usage amount of the insoluble polymer material was 50 parts by weight; a usage amount of the soluble substrate was 30 parts by weight; a usage amount of the functional material was 10 parts by weight; and a usage amount of the chain extender was 10 parts by weight.

### Example 6

Polyethylene oxide (PEO) and polyhexamethylene guanidine were dried at a temperature of 50°C for 6 hours.

A first blending was performed on polyethylene oxide (PEO), polyhexamethylene guanidine, and sodium citrate using a twin-screw extruder. The twin-screw extruder was operated at the following temperatures: a temperature in a first zone was 50°C; a temperature in a second zone was 150°C; a temperature in a third zone was 170°C; a temperature in a fourth zone was 175°C; a temperature in a fifth zone was 175°C; a temperature in a sixth zone was 175°C; and a mold temperature was 160°C.

The mixture obtained through the first blending was subjected to a first air cooling treatment until a temperature of the mixture was below 50°C.

A first granulation treatment was performed on the mixture that had been subjected to the first air cooling treatment obtain a functional masterbatch, and the functional masterbatch had a particle size ranging from 2 mm to 5 mm.

A second blending was performed on the functional masterbatch and polyethylene (PE) using a twin-screw extruder. The twin-screw extruder was operated at the following temperatures: a temperature in a first zone was 150°C; a temperature in a second zone was 160°C; a temperature in a third zone was 170°C; a temperature in a fourth zone was 170°C; a temperature in a fifth zone was 170°C; a temperature in a sixth zone was 170°C; and a mold temperature was 160°C.

The mixture obtained through the second blending was subjected to a second air cooling treatment until a temperature of the mixture was below 50°C.

A second granulation treatment was performed on the mixture that had been subjected to the second air cooling treatment to obtain a slow-release functional unit 100, in which a soluble functional portion 20 had a width d ranging from 50 nm to 50 µm.

In the above-described preparation method, a usage amount of the insoluble polymer material was 60 parts by weight; a usage amount of the soluble substrate was 20 parts by weight; a usage amount of the polyhexamethylene guanidine was 10 part by weight; and a usage amount of the sodium citrate was 10 part by weight.

### Example 7

Polyethylene oxide (PEO) and polyhexamethylene guanidine were dried at a temperature of 50°C for 6 hours.

A first blending was performed on polyethylene oxide (PEO), polyhexamethylene guanidine, and polyaspartic acid using a twin-screw extruder. The twin-screw extruder was operated at the following temperatures: a temperature in a first zone was 50°C; a temperature in a second zone was 150°C; a temperature in a third zone was 170°C; a temperature in a fourth zone was 175°C; a temperature in a fifth zone was 175°C; a temperature in a sixth zone was 175°C; and a mold temperature was 160°C.

The mixture obtained through the first blending was subjected to a first air cooling treatment until a temperature of the mixture was below 50°C.

A first granulation treatment was performed on the mixture that had been subjected to the first air cooling treatment to obtain a functional masterbatch, and the functional masterbatch had a particle size ranging from 2 mm to 5 mm.

A second blending was performed on the functional masterbatch and polyethylene (PE) using a twin-screw extruder. The twin-screw extruder was operated at the following temperatures: a temperature in a first zone was 150°C; a temperature in a second zone was 160°C; a temperature in a third zone was 170°C; a temperature in a fourth zone was 170°C; a temperature in a fifth zone was 170°C; a temperature in a sixth zone was 170°C; and a mold temperature was 160°C.

The mixture obtained through the second blending was subjected to a second air cooling treatment until a temperature of the mixture was below 50°C.

A second granulation treatment was performed on the mixture that had been subjected to the second air cooling treatment to obtain a slow-release functional unit 100, in which a soluble functional portion 20 had a width d ranging from 50 nm to 50 µm.

In the above-described preparation method, a usage amount of the insoluble polymer material was 60 parts by weight; a usage amount of the soluble substrate was 20 parts by weight; a usage amount of the polyhexamethylene guanidine was 10 parts by weight; and a usage amount of the polyaspartic acid was 10 parts by weight.

### Comparative Example 1

Polyethylene oxide (PEO) and polyhexamethylene guanidine were dried at a temperature of 50°C for 6 hours.

A first blending was performed on polyethylene (PE), polyethylene oxide (PEO), and polyhexamethylene guanidine using a twin-screw extruder. The twin-screw extruder was operated at the following temperatures: a temperature in a first zone was 150°C; a temperature in a second zone was 160°C; a temperature in a third zone was 170°C; a temperature in a fourth zone was 170°C; a temperature in a fifth zone was 170°C; a temperature in a sixth zone was 170°C; and a mold temperature was 160°C.

The mixture obtained through the first blending was subjected to an air cooling treatment until a temperature of the mixture was below 50°C.

The mixture that had been subjected to the air cooling treatment was granulated to obtain a functional composite material.

In the above-described preparation method, a usage amount of the insoluble polymer material was 60 parts by weight; a usage amount of the soluble substrate was 20 parts by weight; and a usage amount of the functional material was 20 parts by weight.

**[Table 1]**

| | Service life | Utilization rate of functional material |
|---|---|---|
| Example 1 | Continuous water flushing for 48 hours | 90% |
| Example 2 | Continuous water flushing for 72 hours | 98% |
| Example 3 | Continuous water flushing for 40 hours | 95% |
| Example 4 | Continuous water flushing for 30 hours | 97% |
| Example 5 | Continuous water flushing for 48 hours | 85% |
| Example 6 | Continuous water flushing for 24 hours | 92% |
| Example 7 | Continuous water flushing for 24 hours | 93% |
| Comparative Example 1 | Continuous water flushing for 30 hours | 40% |

20g of each of the slow-release functional units 100 prepared in Examples 1 to 7 and 20g of the functional composite material prepared in Comparative Example 1 were weighed. Then, the weighted samples were continuously flushed for a predetermined duration at a flushing flow rate of 7 L/min, respectively, followed by drying (50°C) and weighing, and they were then flushed for another predetermined duration, followed by drying and weighing, which was repeated for several cycles until the functional material was released slowly and did not exert an obvious effect. The above-mentioned flushing duration referred to a time period during which the functional material can exert an effect normally. With the continuous flushing, the functional material is released slowly, and the slow-release functional unit 100 does not exert an obvious effect. Utilization rate of functional material = (initial weight of slow-release functional unit 100 - weight of slow-release functional unit 100 after flushing and drying)/initial weight of slow-release functional unit 100*100%.

Table 1 indicates that compared with Comparative Example 1, the slow-release functional units 100 prepared in Examples 1 to 7 had a longer slow-release duration and the utilization rate of the functional materials in Examples 1 to 7 was higher. In Comparative Example 1, even with the flushing for a long time period, the utilization rate of the functional materials was maintained at a relatively low level.

In the description of the present invention, it is to be understood that, terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial", and "circumference" refer to the directions and location relations based on the directions and location relations illustrated in the drawings, and they are used for the convenience of describing the present invention rather than indicating or implying that the device or the elements are disposed to locate at the specific directions or are structured and performed in the specific directions. These terms cannot be interpreted as limitations of the present invention.

In addition, the terms such as "first" and "second" are used herein for purposes of description and are not intended to indicate or imply relative importance, or to implicitly show the number of technical features indicated. Thus, a feature defined with "first" and "second" may comprise one or more this feature distinctly or implicitly. In the description of the present invention, "plurality of" means two or more than two, unless specified otherwise.

In the present invention, unless specified or limited otherwise, the terms "mounted," "connected," "coupled", and "fixed" are understood broadly, such as fixed, detachable mountings, connections and couplings or integrated. These terms may refer to mechanical or electrical mountings, connections and couplings; or they may refer to direct and via media indirect mountings, connections, and couplings; or they may refer to inner mountings, connections and couplings of two components or interaction relations between two components. For those skilled in the art, the specific meaning of the above-mentioned terms in the embodiments of the present invention may be understood according to specific circumstances.

In the present invention, unless specified or limited otherwise, a first characteristic is "on" or "under" a second characteristic refers to the first characteristic and the second characteristic may be direct or via media indirect mountings, connections, and couplings. In addition, the first characteristic is "on", "above", "over" the second characteristic may refer to the first characteristic is right over the second characteristic or is diagonal above the second characteristic, or just refer to the horizontal height of the first characteristic is higher than the horizontal height of the second characteristic. The first characteristic is "below" or "under" the second characteristic may refer to the first characteristic is right over the second characteristic or is diagonal under the second characteristic, or just refer to the horizontal height of the first characteristic is lower than the horizontal height of the second characteristic.

Reference throughout this specification to "an embodiment," "some embodiments", "an example", "a specific example", or "some examples" means that a particular feature, structure, material, or characteristic described in connection with the embodiment or example is included in at least one embodiment or example of the present invention. The appearances of the above phrases in various places throughout this specification are not necessarily referring to the same embodiment or example of the present invention. Furthermore, the particular features, structures, materials, or characteristics may be combined in any suitable manner in one or more embodiments or examples. In addition, different embodiments or examples and features of different embodiments or examples described in the specification may be combined by those skilled in the art, unless they are contradictory to each other.

Although embodiments of the present invention have been illustrated and described above, it should be understood that above embodiments are merely illustrative and cannot be construed as limitations of the present invention. Those skilled in the art can make changes, alternatives, and modifications to these embodiments without departing from spirit, principles and scope of the present invention.

## Claims

1. A functional device for a household appliance, the functional device comprising at least one slow-release functional unit, wherein the slow-release functional unit comprises an insoluble base frame and a soluble functional portion.

2. The functional device according to claim 1, wherein the insoluble base frame comprises a plurality of base frame branches arranged at intervals, a gap being formed between any two base frame branches of the plurality of base frame branches, and at least part of a plurality of gaps being in communication with each other to form a channel.

3. The functional device according to claim 2, wherein the slow-release functional unit has an opening at a surface of the slow-release functional unit, an exterior of the slow-release functional unit and the channel being in communication with each other via the opening.

4. The functional device according to claim 2 or 3, wherein:
the soluble functional portion comprises a soluble substrate and a functional material, and the functional material is mixed in the soluble substrate; and
the channel is at least partially filled with the soluble functional portion.

5. The functional device according to claim 4, wherein the slow-release functional unit comprises:
30 to 70 parts by weight of the insoluble base frame;
15 to 60 parts by weight of the soluble substrate; and
1 to 35 parts by weight of the functional material.

6. The functional device according to claim 5, wherein the slow-release functional unit further comprises 5 to 10 parts by weight of a chain extender.

7. The functional device according to any one of claims 4 to 6, wherein the soluble substrate comprises at least one of polyvinyl alcohol, polyethylene glycol, and polyethylene oxide.

8. The functional device according to any one of claims 1 to 6, wherein the insoluble base frame comprises at least one of plastic, rubber, and fiber.

9. The functional device according to any one of claims 4 to 6, wherein the functional material comprises at least one of metallic substances, polymer substances, natural extract substances, scale inhibitor substances, and ionic substances, or a combination thereof.

10. A household appliance, comprising:
a water supply device; and
the functional device according to any one of claims 1 to 9,
wherein the water supply device is connected to the functional device and adapted to supply water to the functional device.
